(19)

Europäisches
Patentamt
European
Patent Office
Office européen
des brevets

(11) **EP 4 468 492 A1**

(12) **EUROPEAN PATENT APPLICATION**

(43) Date of publication:
**27.11.2024 Bulletin 2024/48**

(21) Application number: **24168231.9**

(22) Date of filing: **03.04.2024**

(51) International Patent Classification (IPC):
**H01M 50/333** (2021.01)   **F16K 17/04** (2006.01)

(52) Cooperative Patent Classification (CPC):
**H01M 50/333; F16K 17/04;** H01M 50/358;
H01M 2200/20; H01M 2220/20

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **25.05.2023 US 202363504344 P**

(71) Applicant: **Samsung SDI Co., Ltd.
Yongin-si, Gyeonggi-do 17084 (KR)**

(72) Inventor: **Kraus, Paul
8020 Graz (AT)**

(74) Representative: **Gulde & Partner
Patent- und Rechtsanwaltskanzlei mbB
Wallstraße 58/59
10179 Berlin (DE)**

(54)   **VENTING UNIT FOR BATTERY PACK AND BATTERY PACK INCLUDING SAME**

(57)   The present disclosure refers to a venting unit (40) for a battery pack (100), wherein the venting unit (40) includes a valve assembly (10); the valve assembly (10), including: a housing (1) with a valve opening (8) and a sealing lip (9) formed around the valve opening (8); a first valve part (2) configured for opening and closing the valve opening (8), a stem (6) being connected to the first valve part (2) on one of its ends, the opposing end of the stem (6) being provided with a second valve part (4), a spring (3) extending along the stem (6) between the housing (1) and the second valve part (4); wherein the first valve part (2) includes an opening portion (21) with a planar part (211), and a sloped part (212) being connected on one side to the planar part (211) and on the opposing side being connected to the stem (6), a gradient of the sloped part (212) increasing from the planar part (211) towards the stem (6), wherein in a closed state (101) of the valve assembly (10), the planar part (211) of the first valve part opening portion (21) and the sealing lip (9) of the housing (1) are placed on top of each other to seal a gap between the opening portion (21) and the housing (1), and wherein in an open state (102) of the valve assembly (10), the opening portion (21) is configured to move away from the sealing lip (9) against the force of the spring (3) such that a release gap (34) is formed between the opening portion (21) and the sealing lip (9).

FIG. 1A

## Description

### Field of the Disclosure

The present disclosure relates to venting unit for a battery pack and a battery pack including the venting unit.

### Technological Background

Recently, vehicles for transportation of goods and peoples have been developed that use electric power as a source for motion. Such an electric vehicle is an automobile that is propelled permanently or temporarily by an electric motor using energy stored in rechargeable batteries. An electric vehicle may be solely powered by batteries (Battery Electric Vehicle BEV) or may include a combination of an electric motor and, for example, a conventional combustion engine (Plugin Hybrid Electric Vehicle PHEV). BEVs and PHEVs use high-capacity rechargeable batteries, which are designed to give power for propulsion over sustained periods of time.

Generally, a rechargeable (or secondary) battery cell includes an electrode assembly including a positive electrode, a negative electrode, and a separator interposed between the electrodes. A solid or liquid electrolyte allows movement of ions during charging and discharging of the battery cell. The electrode assembly is located in a casing and electrode terminals, which are positioned on the outside of the casing, establish an electrically conductive connection to the electrodes. The shape of the casing may be, for example, cylindrical or rectangular.

A battery module is formed of a plurality of battery cells connected in series or in parallel. That is, the battery module is formed by interconnecting the electrode terminals of the plurality of battery cells depending on a required amount of power and in order to realize a high-power rechargeable battery.

Battery modules can be constructed in either a block design or in a modular design. In the block design each battery cell is coupled to a common current collector structure and a common battery management system and the unit thereof is arranged in a battery casing. In the modular design, pluralities of battery cells are connected together to form submodules and several submodules are connected together to form the battery module. In automotive applications, battery systems generally include a plurality of battery modules connected in series for providing a desired voltage.

A battery pack is a set of any number of (for example identical) battery modules or single battery cells. The battery modules, respectively battery cells, may be configured in a series, parallel or a mixture of both to deliver the desired voltage, capacity, and/or power density. Components of a battery pack include the individual battery modules, and the interconnects, which provide electrical conductivity between the battery modules.

A battery system may also include a battery management system (BMS), which is any suitable electronic system that is configured to manage the rechargeable battery cell, battery module, and battery pack, such as by protecting the batteries from operating outside their safe operating area, monitoring their states, calculating secondary data, reporting that data, controlling its environment, authenticating it and/or balancing it. For example, the BMS may monitor the state of the battery cell as represented by voltage (e.g., a total voltage of the battery pack or battery modules, and/or voltages of individual battery cells), temperature (e.g., an average temperature of the battery pack or battery modules, coolant intake temperature, coolant output temperature, or temperatures of individual battery cells), coolant flow (e.g., flow rate and/or cooling liquid pressure), and current. Additionally, the BMS may calculate values based on the above characteristics or measured values, such as minimum and maximum cell voltage, state of charge (SOC) or depth of discharge (DOD) to indicate the charge level of the battery cell, state of health (SOH; a variously-defined measurement of the remaining capacity of the battery cell as a percent of the original capacity), state of power (SOP; the amount of power available for a defined time interval given the current power usage, temperature and other conditions), state of safety (SOS), maximum charge current as a charge current limit (CCL), maximum discharge current as a discharge current limit (DCL), and internal impedance of a cell (to determine open circuit voltage).

The BMS may protect the battery pack from operating outside its safe operating area. Operation outside the safe operating area may be indicated by over-current, over-voltage (during charging), over-temperature, under-temperature, over-pressure, and isolation fault or leakage current detection. The BMS may prevent the battery from operating outside its safe operating parameter by including an internal switch (e.g., a relay or solid-state device) that opens if the battery is operated outside its safe operating parameters, requesting the devices to which the battery is connected to reduce or even terminate using the battery, and actively controlling the environment, such as through heaters, fans, air conditioning or liquid cooling.

An example of an operation condition outside the safe operating area is a thermal runaway of a battery cell that may occur due to contamination due to residual particles from production and may result in overheating or overcharging the battery cell. A thermal runaway is a self-accelerating chemical reaction inside the battery cell, which produces high amounts of heat and gas. In a thermal runaway situation, the battery cell temperature rises quickly.

The BMS is critical to the safe operation and optimal performance of rechargeable battery cells and helps minimize the possibility of thermal runaway. For example, if the BMS detects that the temperature is too hot, it can regulate the temperature by controlling cooling fans. Alternatively, if the battery cell cannot be cooled and safe conditions cannot be restored, the BMS may shut down battery cells as necessary to protect the system.

The problem the present invention solves is to provide an improved valve for a battery casing of a battery pack.

**Summary of Invention**

The invention is defined by the appended claims. The description that follows is subjected to this limitation. Any disclosure lying outside the scope of claims is only intended for illustrative as well as comparative purposes.

According to a first aspect of the present disclosure, a venting unit for a battery pack is disclosed, wherein the venting unit includes a valve assembly; the valve assembly, including: a housing with a valve opening and a sealing lip formed around the valve opening; a first valve part configured for opening and closing the valve opening, a stem being connected to the first valve part on one of its ends, the opposing end of the stem being provided with a second valve part, a spring extending along the stem between the housing and the second valve part; wherein the first valve part includes an opening portion with a planar part, and a sloped part being connected on one side to the planar part and on the opposing side being connected to the stem, a gradient of the sloped part increasing from the planar part towards the stem, wherein in a closed state of the valve assembly, the planar part of the first valve part opening portion and the sealing lip of the housing are provided on top of each other to seal a gap between the opening portion and the housing, and wherein in an open state of the valve assembly, the opening portion is configured to move away from the sealing lip against the force of the spring such that a release gap is formed between the sloped part of the opening portion and the sealing lip.

According to another embodiment, the venting unit further includes a cover cap covering the valve assembly, wherein the cover cap is provided with at least one cover cap opening directed into a first direction.

The stem and the spring may extend perpendicular to the first valve part and the second valve part.

The first valve part may be provided with at least one guide rib on its inner surface portion. The guide rib may be provided such that the guide rib and the sealing lip remain in close contact during opening of the valve assembly.

In an embodiment, the gradient of the sloped part has its smallest value at the connection point of the sloped part to the planar part.

According to another embodiment, the first valve part is movable along a longitudinal direction of the stem between an opened end position and a closed end position.

According to an embodiment, during opening of the valve assembly, the release gap between the sealing lip and the sloped part increases, the maximum of the release gap being equal to the distance between the sealing lip and the stem.

The spring may be in a pretensioned state.

According to another embodiment, the stem may be hollow.

According to an embodiment, the sealing lip for contacting with the planar part of the first valve part is elevated with respect to its surrounding housing surface.

According to a second aspect of the present disclosure, a battery pack including a plurality of battery cells accommodated within a battery casing and at least one venting unit according to anyone of the preceding embodiments, wherein the battery casing is provided with the at least one venting unit mounted to a respective venting hole formed at the battery casing.

According to another embodiment of the battery pack, wherein the guide rib includes a guide surface configured to move parallel to the longitudinal direction of the stem.

According to another embodiment of the battery pack, the stem of the valve assembly protrudes into an interior of the battery casing perpendicular to the battery casing.

According to another embodiment of the battery pack, at least two venting units are mounted to respective venting holes formed in the battery casing.

According to another embodiment of the battery pack with a venting unit of any one of the embodiments of the first aspect, wherein the one or more cover cap openings point to the direction of gravity.

According to a third aspect of the present disclosure, an electric vehicle comprising the battery pack according to the second aspect.

The general inventive concept and preferred embodiments will be described in detail below.

Further aspects of the present disclosure could be learned from the dependent claims or the following description.

**Brief Description of the Drawings**

Features will become apparent to those of ordinary skill in the art by describing in detail exemplary embodiments with reference to the attached drawings in which:

Fig. 1A    illustrates a schematic cross section side view of the venting unit in a closed state according to a first embodiment;

Fig. 1B    illustrates a schematic cross section side view of the venting unit in an open state according to the first embodiment;

Fig. 1C    illustrates a detailed schematic cross section side view of the venting unit in a closed state according to the first embodiment;

Fig. 1D    illustrates a schematic cross section side view of the venting unit in a closed state according to the first embodiment;

Fig. 2    illustrates a schematic perspective exploded view of the venting unit according to the first embodiment;

Fig. 3A    illustrates a schematic perspective view of the assembled venting unit according to the first embodiment;

Fig. 3B    illustrates a schematic perspective view of the assembled venting unit according to the first embodiment;

Fig. 4    shows a graph illustrating the flow area in relation to the compression of the spring of the venting unit;

Fig. 5A    shows a plotted function illustrating the shape of a sloped part of a venting unit;

Fig. 5B    shows another plotted function illustrating the shape of a sloped part of a venting unit;

Fig. 6A    illustrates a schematic cross section side view of a battery pack including a venting unit;

Fig. 6B    illustrates a schematic cross section side view of an electric vehicle including a battery pack;

Fig. 7    illustrates a flow chart for a method for assembling a venting unit.

**Detailed Description of the Invention**

Reference will now be made in detail to embodiments, examples of which are illustrated in the accompanying drawings. Effects and features of the exemplary embodiments, and implementation methods thereof will be described with reference to the accompanying drawings. In the drawings, like reference numerals may denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure. As used herein, the term "and/or" includes any and all combinations of one or more of the associated listed items. Expressions such as "at least one of," when preceding a list of elements, modify the entire list of elements and do not modify the individual elements of the list.

It will also be understood that when a film, a region, or an element is referred to as being "above" or "on" another film, region, or element, it can be directly on the other film, region, or element, or intervening films, regions, or elements may also be present.

In the following description of embodiments of the present disclosure, the terms of a singular form may include plural forms unless the context clearly indicates otherwise.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

General Concept

According to one aspect of the present disclosure, a venting unit for a battery pack is disclosed. The venting unit includes at least a valve assembly. The valve assembly includes a housing with a valve opening and a sealing lip formed around the valve opening. The valve opening may be round, rectangular or may have any other shape. The valve assembly further includes a first valve part configured for opening and closing the valve opening, a stem being connected to the first valve part on one of its ends, the opposing end of the stem being provided with a second valve part and a spring extending along the stem between the housing and the second valve part. The first valve part includes an opening portion having a planar part, and a sloped part. The sloped part is on one side connected to the planar part and on the opposing side connected to the stem. A gradient of the sloped part increases from the planar part towards the stem. The gradient of the sloped part decreases from the planar part towards the stem. In a closed state of the valve assembly, the planar part of the opening portion and the sealing lip of the housing are on top of each other to seal a gap between them. In an open state of the valve assembly, the opening portion is configured to move away from the sealing lip against the force of the spring such that a release gap is formed between the opening portion and the sealing lip.

The venting unit may avoid overpressure due to, for example, hot gas that is released during a thermal runaway of battery cells within the battery pack. To control the opening behavior of the venting unit, a valve pretensioned by a spring is used. If the pressure within the battery packs rises, the pressure on the movable valve-body rises as well and acts as an internal force onto the valve body. When the force is larger than the force of the spring closing the valve, the valve opens and establishes a connection between both sides of the valve through which gas can flow.

During this disclosure, the planar part may not be entirely straight, but may include other structures like a sealing lip fixing means for fixing a sealing lip. The planar part may extend radially away from the valve opening. The sloped part may be continuously differentiable. The gradient refers to the state in which the valve opening is in a vertical position. Obviously, the relation of the gradient would be opposite when the valve opening is in a horizontal position. The release gap lies in a plane of the valve opening or parallel thereto.

Due to the increasing gradient of the sloped part, the flow area for air or hot gas does not increase linear with the opening of the valve. Further, a significant geometrical advantage can be obtained by moving the spring mechanism to the inside of the battery pack.

According to another embodiment of the present disclosure, the venting unit further includes a cover cap covering the valve assembly. The cover cap may be a protection cap, which protects the valve assembly from contaminations like dust and/or environmental influences like moisture and ice. Further, the cover cap is provided with at least one cover cap opening directed into a first direction. The cover cap opening may be directed such that the first direction is the direction of gravity.

In summary, the cover cap not only protects the valve assembly from direct damage due to physical contact, but also provides protection from environmental influences and contaminations. In this regard, the at least one cover cap opening which is directed into a first direction may be used to control the direction, to which the valve opens. This direction may be the direction of gravity, such that the environmental influences and contaminations would have to act against gravity. Thereby, the environmental influences and contaminations are reduced naturally. However, in special circumstances, for example in tight installation spaces, other directions may be beneficial in order to optimize certain design parameters like thermal parameters and safety parameters.

According to a further embodiment of the venting unit, the stem and the spring extend perpendicular to the first valve part and the second valve part.

The spring provides the counter-force for actuating the venting unit, that is, holding the valve unit in the normally closed state. In order to actuate the venting unit, a force acts on the first valve part and forces the valve into the open state, against the force of the spring. For the spring to act efficiently, the spring extends along the stem and is installed perpendicular to the first valve part and the second valve part.

According to another embodiment of the venting unit, the first valve part is provided with at least one guide rib on its inner surface portion. A guide rib may be a thin protruding portion connecting the stem and the first valve part. The connection may be such that the rigidity of the first valve part is increased. Thin may mean a thickness of between 0.5 to 3 mm. Optionally, the thickness may be in a range of 1 to 2 mm. Alternatively, the guide rib may only be present at the first valve part, that is not extend to the stem. Further alternatively, the guide rib may only be present at the outer circumference of the first valve part. The number of guide ribs may be two or more, three, four, five, or more. The at least one guide rib prevents a displacement of the first valve part in a direction other than the opening and closing direction of the valve assembly. In other words, the guide rib prevents a movement of the first valve part out of the valve opening. The guide rib may be provided such that the guide rib and the sealing lip remain in contact during opening of the valve assembly. Contact may mean that the guide rib is in direct contact with the sealing lip on at least one point such that the opening of the valve is guided by the contact between the guide rib and the sealing lip. The contact of the guide rib is made through a guide surface. The guide surface is provided radially extending from a guide rib body. Radial refers to the center or midpoint of the valve opening.

Thereby, the first valve part is held inside the valve opening in the open state of the valve assembly. The length of the guide surface may be equal to a length of the stem.

According to another embodiment of the venting unit, the gradient of the sloped part has its smallest value at the connection point of the sloped part to the planar part. As mentioned above, this refers to the state when the valve opening extends vertically. For the calculation of the gradient, the point where the planar part transitions into the sloped part may be excluded.

In one embodiment, the shape of the sloped part is defined by a non-linear function, wherein the origin is the transition point. Optionally, the non-linear function is polynomial or exponential. By the use of mathematical functions, the repeatability and design variables are easy to determine and apply.

This small gradient has the effect that initially, only a small release gap is available for gas on the inside to be released to the outside. This brings about the advantageous effect that even though the movement of the first valve part remains linear, the gas release is controlled to increase slowly first and increase more and more, the further the valve opens. The gradient increases monotonically. In other words, the release of air may follow a non-linear function, for example a polynomial or exponential curve, which may be defined by the gradient of the sloped part.

According to another embodiment of the venting unit, the first valve part is movable along a longitudinal direction L of the stem between an opened end position and a closed end position. The closed end position is in the closed state, when the sealing lip and the planar part seal the gap. The opened end position is reached when the spring is compressed completely or when any other physical limitation prevents a further opening of the first valve part. The distance between the opened end position and the closed end position is the first valve part travel distance. The first valve part travel distance may be identical to the compression of the spring starting from the closed state of the valve assembly.

According to another embodiment of the venting unit, the release gap between the sealing lip and the sloped part increases during opening of the valve assembly and the maximum of the release gap is equal to the distance between the sealing lip and the stem. The distance may be equal to the radially inner edge of the sealing lip and the radially outer wall of the stem, when the stem has reached at least the plane of the valve opening. The release gap may be formed in a plane of the valve opening and may be formed around and perpendicular to the stem.

As mentioned above, even though the movement of the spring and the first valve part is linear and proportional to a force acting onto the first valve part, the maximum of the release gap is not reached linearly, but for example exponentially, defined by the gradient of the sloped part.

According to another embodiment of the venting unit, the spring is in a pretensioned/ prestressed/preloaded state in a closed state of the valve assembly. Pretensioned or prestressed or preloaded means that the spring is not in a relaxed state, but compressed. This compression may be minimal or even close to zero. Depending on the application, the pretension may be made larger, for example compliant with safety regulations. The pretension may provide tightness during normal operation. The pretension may consider the installation location such that a spring of a horizontally installed valve assembly acts against gravity and a vertically installed spring of a valve assembly does not act against gravity.

According to an optional embodiment of the venting unit, the stem is hollow.

A hollow stem is light and rigid and thus, provides a good performance for the valve assembly. Optionally, the wall of the stem may be provided with additional holes through its side wall. However, the stem is not limited thereto and may also be solid or have any other shape having the same functionality.

According to an optional embodiment of the venting unit, the sealing lip for contacting with the planar part of the first valve part is elevated with respect to its surrounding housing surface.

The sealing lip may be elastic. When the spring is pretensioned, the sealing lip is pressed against the planar part. Due to the elasticity, the sealing lip and the planar part may slightly deform but and their connection remains tight. Deformation may relate to a situation in which the sealing lip may tilt towards the center of the valve opening.

According to another embodiment of the venting unit, the first valve part is, at its face facing away from the housing, indented and forms a trough. Indented means that the middle portion of the first valve part is recessed. The recess may extend from one side of the housing to another side of the housing. The trough provides elasticity for the first valve part. Further, the air circulation within the installed cover cap is improved.

According to another embodiment of the venting unit, the valve opening is a void.

Thereby, airflow is not hindered in an open state of the valve assembly. Thus, the need for supporting webs within the valve opening of the housing is eliminated and air can freely flow through the valve opening.

According to a second aspect of the present disclosure, a battery pack includes a plurality of battery cells accommodated within a battery casing and at least one venting unit according to the first aspect. The battery casing is provided with the at least one venting unit mounted to a respective venting hole formed at the battery casing.

The guide rib includes a guide surface configured to move parallel to the longitudinal direction of the stem.

The stem of the valve assembly protrudes into an interior of the battery casing perpendicular to the battery casing. Perpendicular refers to the wall of the battery casing, to which the venting unit is installed to.

When the stem and the spring protrude to the interior of the battery pack, the outside of the battery back is flat. Thereby, the battery pack may be installed and handled more conveniently. Further, damage to the venting unit, for example during handling of the battery pack, is less likely.

According to another embodiment of the battery pack, at least two venting units are mounted to respective venting holes formed in the battery casing.

Due to the structure of the first valve part having the above-described gradient, when several valves are installed, tolerances can be compensated for and all valves open at the same time. Thereby, gas can be released uniformly through a plurality of venting unit installed to the battery pack. The tolerances may be spring tolerances or production tolerances of the housing and/or the first valve part.

According to another embodiment, the battery pack includes a venting unit according to the first aspect comprising a cover cap, wherein one or more cover cap openings point to the direction of gravity.

Thereby, the outer surface of the one or more venting units of the battery pack are largely guarded from contaminations like dust and environmental influences like moisture and ice, compared to a state where no cover cap is provided and where the cover cap openings are open to other directions except the direction of gravity. Due to the limitation of the one or more cover cap openings to the direction of gravity, the contaminations and environmental influences are hindered. It becomes much less likely that they reach the outer surface of the valve assembly and possibly block or disturb the action of the valve assembly. Consequently, the safety of the battery pack is improved.

According to a third aspect of the present disclosure, an electric vehicle includes the battery pack according to the second aspect.

Yet another aspect of the present disclosure refers to a method for assembling a venting unit according to the first aspect, including the following steps. Firstly, the first valve part and the housing are placed in this order and upside down onto a first ultrasonic tool fixture. The first valve part includes the stem. Secondly, the spring and the second valve part are placed in this order onto the stem of the first valve part as prepared under firstly. Thirdly, a second ultrasonic tool fixture is applied to the second valve part as prepared under secondly, thereby welding the second valve part to the stem of the housing and pre-tensioning the spring. Alternatively, the stem may be integrally formed with the second valve part such that the stem is welded to the first valve part. Further alternatively, the first valve part, the second valve part and the stem are integrally formed and the housing is formed of two parts, which are glued or welded around the integral valve part.

Specific Embodiments

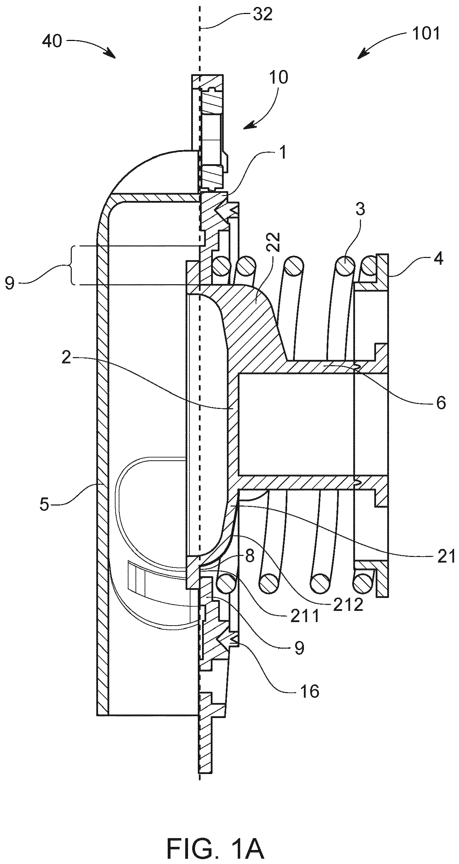

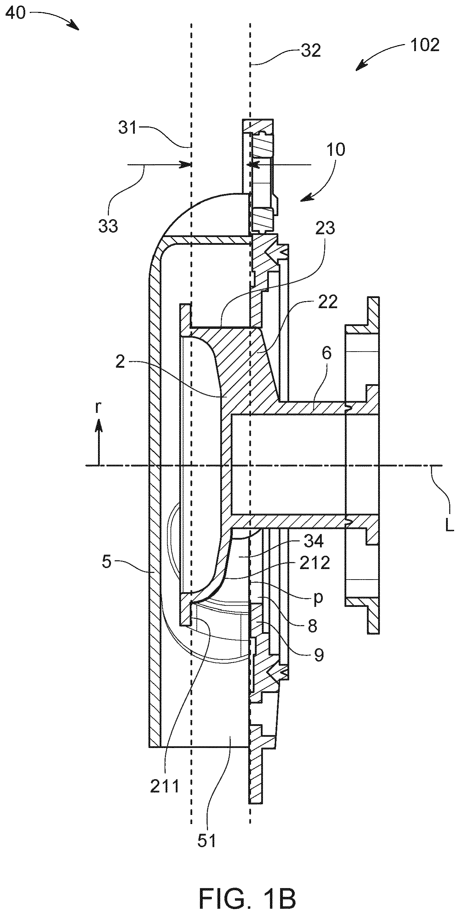

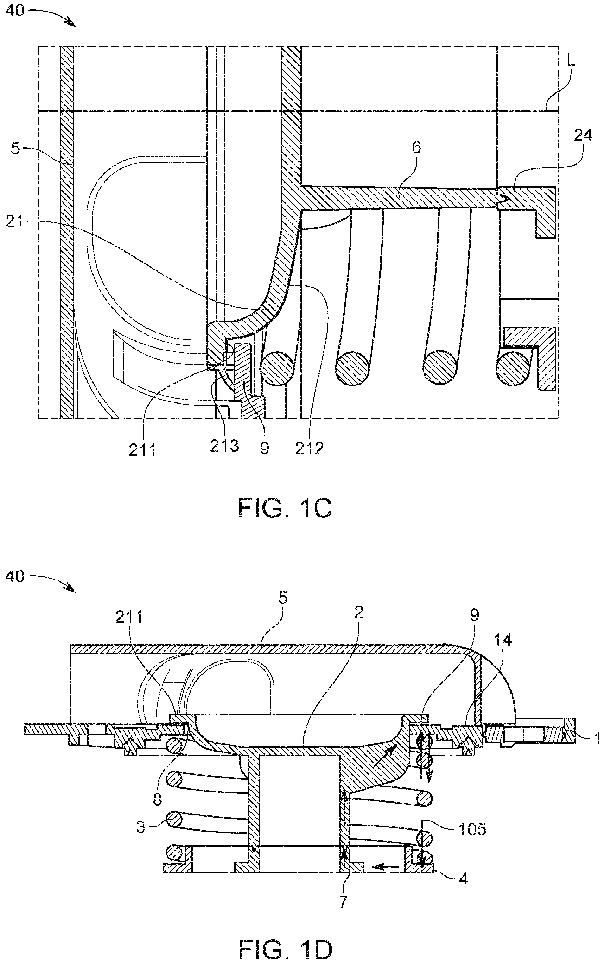

Fig. 1A illustrates a schematic cross section side view of a venting unit 40 in a closed state 101 of a first embodiment, Fig. 1B illustrates a schematic cross section side view of the venting unit 40 in an open state 102 and Fig. 1C illustrates a detailed schematic cross section side view of the venting unit 40 of Fig. 1A. Fig. 1D further illustrates a schematic cross section ide view of the venting unit 40 in a closed state. For illustrative purposes, Fig. 1A, 1B, 1C and 1D will be described together and numerals of the same parts may not be repeated throughout all figures here. In the cross-sectional view of Fig. 1A-1D, the structure of the venting unit 40 is visible. Provided is the venting unit 40 for a battery pack, wherein the venting unit 40 includes a valve assembly 10 (elements of Fig. 1A without a cover cap 5) and optionally the cover cap 5. The valve assembly 10 includes a housing 1 with a valve opening 8 in which a first valve part 2 and a second valve part 4 are installed movably with respect to the housing 1 such that a pressure release gap 34 (see Fig. 1B) is opened for venting. The valve assembly 10 further includes a sealing lip 9 formed around the valve opening 8, wherein the first valve part 2 is configured for opening and closing the valve opening 8, a stem 6 being connected to the first valve part 2 on one of its ends, the opposing end of the stem 6 being provided with the second valve part 4, and a spring 3 extending along the stem 6 between the housing 1 and the second valve part 4. The first valve part 2 includes an opening portion 21 (highlighted by a thicker solid line in Fig. 1A) with a planar part 211 (in Fig. 1C), and a sloped part 212 (Fig. 1C) being connected on one side to the planar part 211 and on the opposing side of the steam 6 being connected to the stem 6. A gradient of the sloped part 212 increases from the planar part 211 towards the stem 6. In a closed state 101 of the valve assembly 10, the planar part 211 of the opening portion 21 and the sealing lip 9 are provided on top of each other to seal a gap between them. In an open state 102 of the valve assembly 10, the opening portion 21 is configured to move away from the sealing lip 9 against the force of the spring 3 such that the pressure release gap 34 is formed between the sloped part 212 of the opening portion 21 and the sealing lip 9. When the valve unit 40 is fully opened, the pressure release gap 34 may form between the stem 6 and the sealing lip 9, as shown in Fig 1B.

The first valve part 2 may also be called valve head. The valve head 2 is designed such that, in the first millimeter of travel when the valve unit 40 opens, only a small area is available for the gas to flow. However, when the pressure increases, an increased flow area is opened to release gas. By this design, opening pressure tolerances between multiple venting units 40 is compensated. Therefore, multiple venting units 40 installed in the same battery pack will open at the same time.

Going into details of the valve assembly 10, the first valve part 2 closes the valve opening 8. The opening portion 21 of the first valve part 2 is located to close the valve opening 8 in a closed state of the valve assembly 10. As mentioned above, the opening portion 21 includes the sloped part 212 and, adjacent thereto and radially outside, the planar part 211 (see Fig. 1C). The sloped part 212 is provided with a gradient which has its smallest value at the connection point of the sloped part 212 to the planar part 211. The planar part 211 seals the first valve part 2 towards the sealing lip 9 of the housing 1. To improve the sealing, the planar part 211 optionally includes a valve seal 213 (Fig. 1C) which contacts the sealing lip 9. Thereby, the sealing may become gastight. Optionally, the sealing may be watertight according to IPX7K or IPX9K. The first valve part 2 and the second valve part 4 have a longitudinal axis L, which extends through the center of the stem 6. The radial direction r is perpendicular to the longitudinal axis L and may be referred to when explaining certain features of the present disclosure. Even though the planar part 211 extends parallel to the valve opening 8, the planar part 211 is not limited thereto and may also be parallel to the longitudinal direction L or at an angle to the longitudinal direction L, that is having a tapered form (no figure shown).

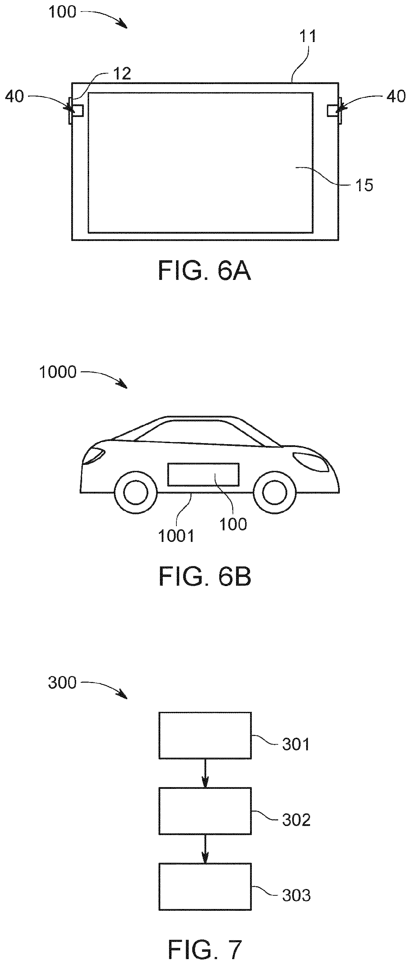

In Figs. 1A and 1B, a guide rib 22 is shown. The guide rib 22 has a guide surface 23 (highlighted in Fig. 1B), which is in contact with a radially inner portion of the sealing lip 9 (Fig. 1A). The guide surface 23 moves parallel to the longitudinal direction L. This guide surface 23 prevents the first valve part 2 from moving in radial direction r. That is, the guide rib 22 is provided such that the guide rib 22 and the sealing lip 9 remain in close contact during opening of the valve assembly 10. The width of the guide rib 22 may be equal to a wall thickness of the first valve part 2 or smaller or thicker than the wall thickness of the first valve part 2, for example between 0.5 to 3 mm. Optionally, the thickness may be in a range of 1 to 2 mm. In this embodiment, three guide ribs 22 are provided. However, the number of guide ribs is not limited and may be any number between 1 to 5 or even more than 5. The guide rib 22 may be formed integrally with the stem 6 and the first valve part 2. Additionally, a weld seam 24 between the first valve part 2 and the second valve part 4 may be present. This weld seam 24 results from a welding process of the manufacturing method for producing the valve assembly, as will be described in detail regarding Fig. 7 below.

The first valve part 2 and the second valve part 4 are together movably arranged within the valve opening 8. The movement is restricted at two positions. Firstly, in the closed state 101, the first valve part 2 is in direct contact with the sealing lip 9 of the housing 1, corresponding to a closed end position 32. The first valve part 2 is held in this state by the force of the spring 3. The face which is located between the planar part 211 of the first valve part 2 and the sealing lip 9 in the closed state 101 is the plane of the valve opening p. When the first valve part 2 moves along the longitudinal axis L to its second restricted position, that is, when the spring 3 is completely compressed, the planar part 211 is spaced apart from the plane of the valve opening p by a first valve part travel distance 33. This position corresponds to an opened end position 31. In other words, the first valve part 2 moves between the closed end position 32 and the opened end position 31. In this regard, in Fig. 1B, the spring 3 is in a compressed state. The spring 3 is omitted in Fig. 1B for displaying the structure more clearly. In Fig. 1B, the release gap 34 between the sealing lip 9 and the stem 6 is visible. The release gap 34 is formed everywhere in the valve opening 8 except for the location of the at least one guide rib 22. The length of the guide surface 23 may be equal to the first valve part travel distance 33. However, the length of the guide surface 23 is not limited thereto, and may be shorter or longer. The length of the guide surface 23 is defined by the linear portion of the guide surface 23.

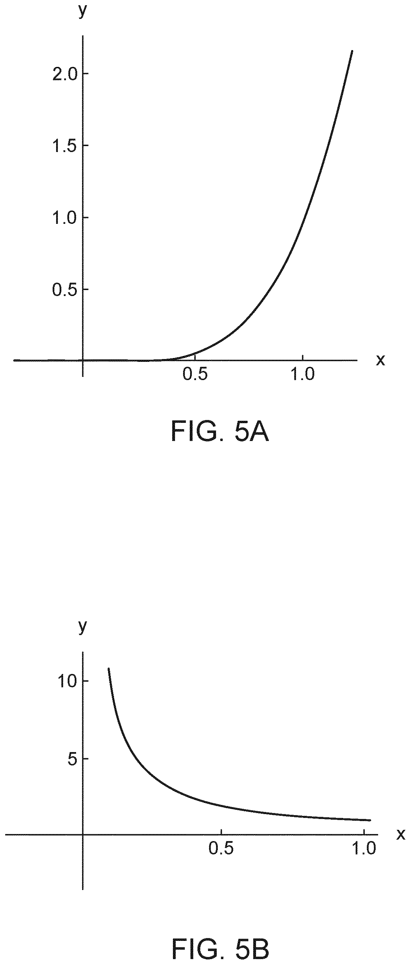

Now turning to Fig. 1C, the sloped part 212 of the opening portion 21 will be described in detail. Depending on the orientation of the venting unit 40, the description of the sloped part 212 differs. When the radial direction r is a vertical direction, the shape of the sloped part 212 in the cross-sectional view as shown in Fig. 1C may be described by the mathematical function

$$y = f(x) = x^z,$$

that is an exponential function, wherein z may assume values > 1, with x-values $\geq$ 0. The origin of the graph is the contact point of planar part 211 and the sloped part 212. As is apparent for the person skilled in the art, the larger the exponent z, the smaller is the initial gradient for x-values << 1 and the steeper is the gradient for x-values > 1. One example of a plotted exponential function illustrating the sloped part 212 of a venting unit 40 is shown in Fig. 5A. The function can be polynomial as well. However, in an alternative formulation, if we assume that y=0 is the point of connection between the sloped part 212 and the stem 6 (x-axis intersects the point of connection between the sloped part 212 and the stem 6), and x=0 is the point of connection between the sloped part 212 and the planar part 211 (i.e. the y axis intersects the point of connection between the sloped part 212 and the planar part 211), and the radial direction r is a horizontal direction, the shape of the sloped part 212 in the cross-sectional view as shown in Fig. 1C may be described by the mathematical function

$$y = f(x) = \frac{1}{x^z}$$

as shown in Fig. 5B, with x-values > 0. As is apparent for the person skilled in the art, the function may be altered by, for example, factors to achieve other desired similar shapes. As in Fig. 5A, the x-values may have an exponent "z". The function can be polynomial as well.

Further optionally, the mathematical function may be $R = x^2 + y^2$, in which the plane shown in Fig. 1B is the x-y plane. That is, the sloped part 212 can be formed by a part of a circle which is easy to be implemented. In this particular case, the gradient of the function in the x-direction would be 2x.

All of the described shapes are meant to be implemented in a rotationally symmetric manner around the longitudinal axis L and irrespective of the addition of any guide ribs 22. By the shape of the sloped part 212, the size of the release gap 34 is controlled. That is, during opening of the valve assembly 10, the release gap 34 between the sealing lip 9 and the sloped part 212 increases. The maximum of the release gap 34 is equal to the distance between the sealing lip 9 and the stem 6. The release gap 34 is a two-dimensional measure, but represents a ring-shaped gap between the sealing lip 9 and the sloped part 212. The area of the ring-shaped gap corresponds to the flow area which will be discussed later.

Fig. 1D depicts a schematic cross section side view of the venting unit 40 in the closed state. The descriptions regarding Figs. 1A, 1B and 1C apply. Fig. 1D illustrates that a force path 105 goes from the housing 1 along the spring 3, to the second valve part 4 and through an ultrasonic welded connection 7 to the first valve part 2 back to the housing 1 via the sealing lip 9. The force path 105 is established by the spring force of the spring 3, which is in a pretensioned state after installation. In detail, the force path 105 encloses the sealing lip 9 from two sides. That is, by the planar part 211 of the first valve part 2 from one side and by one end of the spring 3 on the other side. For some applications, the spring 3 may not be installed in a pretensioned state. The depicted force path 105 has the advantage that the valve opening 8 is a void without any connections like webs for supporting the valve body, that is the valve part 2. Thereby, air can flow freely through the valve opening 8. Further, the tight sealing along the sealing lip 9 ensures the sealing performance of the venting unit 40. In fact, the sealing lip 9 for contacting with the planar part 211 of the first valve part 3 is elevated with respect to its surrounding housing surface 14. Thereby, when a force acts onto the sealing lip 9, its surface deforms less and, therefore, the sealing performance is increased.

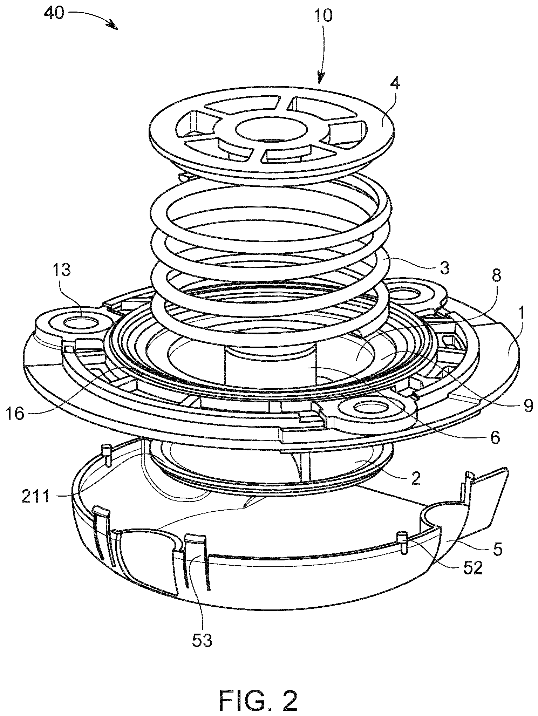

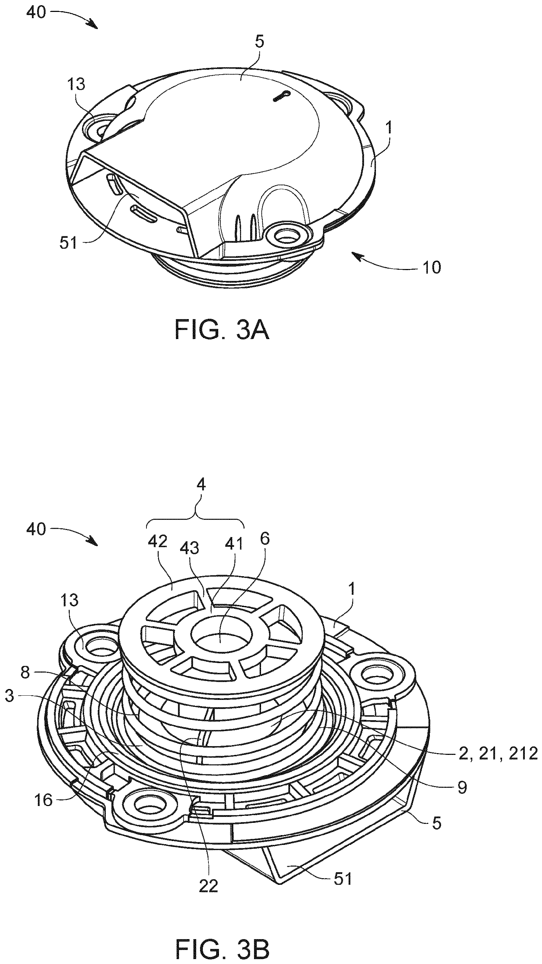

Fig. 2 illustrates an exploded view of the venting unit 40. The descriptions regarding Figs. 1A to 2 apply accordingly. Fig. 3 also represents an assembly sequence of the venting unit 40 as will be described later regarding Fig. 7. In the exploded view, it is apparent that the first valve part 2 is integrally formed with the stem 6 and that the second valve part 4 is separate. Further, the sealing lip 9 forms a seat for the spring 3. That is, the spring 3 applies a force into the direction of the sealing lip 9 and the planar part 211 of the first valve part 2 also applies a force into the direction of the sealing lip 9 so that the sealing lip 9 is sandwiched between the planar part 211 and the spring 3. Thereby, the sealing performance is improved. Compared to the assembled views of Figs. 1A-1D, positioning means, that is pins 52, and fixing means, that is hooks 53 of the cover cap 5 are shown which securely position and fix the cover cap 5 to the housing 1. However, as the cover cap 5 is only optional, also any positioning means or fixing means are optional and the cover cap 5 if provided could be connected differently to the valve assembly 10.

*Table 1: Components of the Venting Unit 40 in Fig. 2*

| Ref No. | PART NAME | MATERIAL |
|---------|-----------|----------|
| 1 | Housing | PP-GF20 V0/ TPE-S ShA 50/ 1.0715 |
| 2 | Frist valve part | PP-GF30 V0/ TPE-S ShA 50 |
| 3 | Spring | 1.4310 |
| 4 | Second valve part | PP-GF30 V0 |
| 5 | Cover cap | PP-GF30 V0 |

Table 1 shows the components of the venting unit 40 as shown in Fig. 2, i.e. the housing 1, the first valve part 2, the spring 3, the second valve part 4, and the cover cap or protection cover 4 and their materials.

Fig. 3A is a schematic perspective view showing the exterior of the venting unit 40 according to a first embodiment in an assembled state. The venting unit 40 optionally includes the cover cap 5 on top of the valve assembly 10 as discussed previously. The cover cap (e.g. also called protection cover) 5 is designed such that dust and moisture (e.g., ice) would need to move or climb upwardly along a channel. Due to gravity, dust and moisture generally move downwardly and move upwardly only a small distance. That is, to prevent the above-mentioned negative effects, when the venting unit 40 is installed in a battery pack 100 (see Fig. 6A), a cover cap opening 51 of the cover cap 5 is directed to the direction of gravity. However, due to design requirements, the cover cap opening 51 may be directed to a direction angled to the direction of gravity. Further, the venting unit 40 has mountings means 13 provided on the housing 1. Here, three mounting means 13 are visible. However, any suitable amount of mounting means 13, like 2, 4 or 5 are possible.

In this embodiment, the mounting means 13 are holes, through which fixing means like screws may pass through. Optionally, the mounting means 13 may be pins, integrally formed anchors or any other fixing means. The connecting means are connected to a battery casing 11 (see Fig. 6A), so that the venting unit 40 is mounted to a respective venting hole 12 (see Fig. 6A) formed in the battery casing 11.

Fig. 3B is a schematic inside perspective view of the assembled venting unit 40. The descriptions regarding all previous figures still apply, unless stated otherwise. Fig. 3B shows the same venting unit of Fig. 3A rotated by about 180°, so that the bottom instead of the upper side is visible. According to this embodiment, the venting unit 40 includes the spring 3 (e.g., on the inside of the battery pack 100), the cover cap 5 (e.g., a dust and moisture protection cap), and the valve design having an improved opening behavior. The valve, that is the valve assembly 10, further includes the first valve part 2 configured for opening and closing the valve opening 8 and the stem 6 being connected to the first valve part 2 on one of its ends. The opposing end of the stem 6 is provided with a second valve part 4. The spring 3 extends along the stem 6 between the housing 1 and the second valve part 4. The second valve part 4 may be formed with an inner circle 41 connected to the stem 6, an outer circle 42 for holding the spring 3 and webs or ribs 43 for connecting the inner circle 41 to the outer circle 42. However, the second valve part 4 may also have a different shape, like a disk-shape. Further, the stem 6 and the spring 3 extend perpendicular to the first valve part 2 and the second valve part 4. Additionally, it can be seen that the stem 6 is hollow in this non-limiting embodiment. The first valve part 2 is further provided with three guide ribs 22 on its inner surface portion 21. By the guide ribs 22 and the spring 3, the first valve part 2 is held in the center of the spring 3, or in other words, in the center of the valve opening 8. Optionally, the second valve part 4 and the stem 6 may even be omitted, when the first valve part 2 is directly provided with holding means, like clips, for supporting the spring 3. Such holding means may be provided on the guide rib 22. The opposite side of the spring 3 is supported on the downside of the sealing lip 9 of the housing 1. Radially outside and distanced from the sealing lip 9, a housing seal 16 is optionally provided. All parts enclosed by the housing seal 16 are located on the inside of a battery pack (see Fig. 6A), when the venting unit 40 is mounted to the battery pack. The housing seal 16 seals the venting hole 12 (see Fig. 6A) to the housing 1 so that the opening and closing of the venting hole 12 is controlled by the venting unit 40.

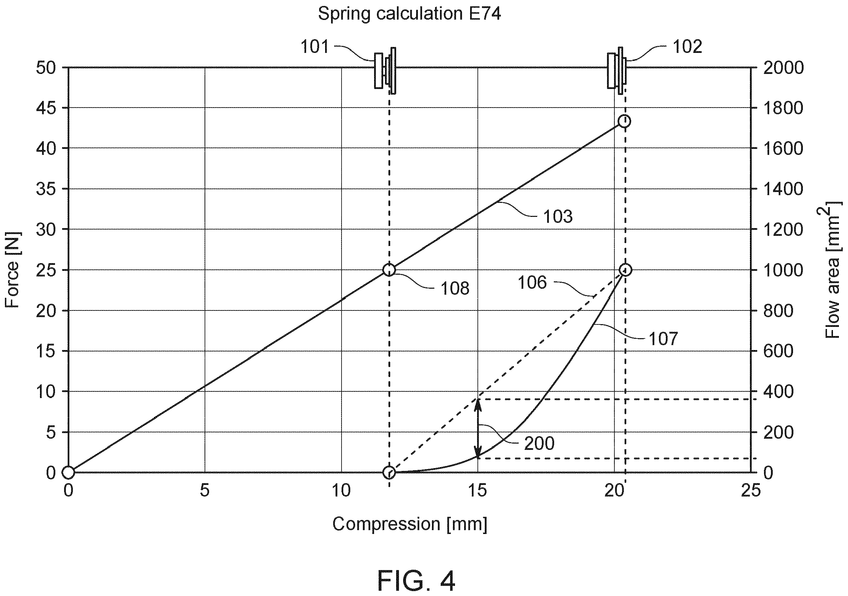

Fig. 4 shows a graph illustrating the flow area in relation to the compression of the spring 3 of the venting unit 40. Specifically, Fig. 4 shows a comparison between a conventional venting unit (graph labeled "conventional design" - dotted line) and the above-described venting unit 40 according to an embodiment of the present disclosure (labeled as "optimized design" - solid line). In detail, the vertical axis on the left shows the force applied to the spring 3 and the horizontal axis shows the compression of the spring 3. The solid line labeled 103 depicts the spring force. When no force is applied, the compression of the spring 3 is zero. Therefore, the graph of the spring force 103 starts at the point of origin. Further, the spring 3 is installed in a pretensioned state which can be seen by the vertical dotted line starting from the symbol indicating the closed state 101. When a force acts on the first valve part 2 which is greater than the pretension force 108, the spring is compressed and the first valve part 2 moves along its longitudinal axis L away from the housing 1. In the open state 102, when the valve assembly reaches its opened end position 31, the spring 3 is compressed to its maximum and a further increase in force does not result in further movement of the first valve part 2. This state is indicated by the vertical dotted line starting from the symbol indicating the open state 102. For conventional venting units for battery packs, the linear compression of a spring results in a linear movement of a valve body and, consequently, a linear increase in flow area. The flow area is illustrated on the second vertical axis on the right. Flow area refers to the area of the opening which the venting assembly opens so that gas can flow from the pressure side, where the force acts on, to the other side. This linear increase in flow area is shown by the dotted line representing a conventional design 106. With the optimized design 107 (solid line), the linear increase in flow area is modified into a non-linear increase in flow area. For better comparison, the graph shows that the starting point and the end point of the conventional design 106 and the optimized design 107 are identical. The difference lies in the slower initial increase in flow area and the sharper increase in flow rate at larger opening positions. That is, as exemplary shown at a compression of about 15 mm of the spring 3, the flow area is shifted from about 380 $mm^2$ down to about 100 $mm^2$ for the same spring 3. That is, a flow area shift 200 is introduced. This flow area graph of the optimized design 107 is defined by the shape of the sloped part 212. In fact, the flow area is proportional to the release gap 34 between the sealing lip 9 and the sloped part 212. Exemplary embodiments for the shape of the sloped part 212 are shown in Figs. 6A and 6B, as already mentioned above. In an alternative embodiment, additionally or alternatively to the sloped part 212, a progressive spring may be used. A progressive spring has a non-linear characteristic spring force curve, compared to the linear characteristic spring force curve of a linear spring (cf. spring force 103), so that the flow area may be adjusted similarly.

Fig. 5A shows a plotted function illustrating a first example of a shape of a sloped part 212 of a venting unit 40 and Fig. 5B shows another plotted function illustrating the shape of a second sloped part 212 of a venting unit 40 according to the first embodiment as described above. In any case, these functions are only examples of shapes for the sloped part 212 and depend on which element of the venting unit 40 is associated with the origin of the graphs. The shape is not limited thereto and may be a free-hand shape not following any function or may follow a different function resulting into a similar shape.

Fig. 6A illustrates a schematic cross section side view of a battery pack 100 including a venting unit 40 according to the embodiment of Figs 1 to 3B. The battery pack 100 houses one or more battery cells 15 within a battery casing 11. In this example, the battery casing 11 includes two venting holes 12 and two venting units 40 mounted respectively thereto. Accordingly, the spring 3 of the venting unit 40 can be provided inside the battery casing 11 such that a pressure rise inside the battery casing 11 can be directly applied to the valve assembly 10. However, the battery pack 100 is not limited thereto and may have any other configuration with further venting units 40 or only one venting unit 40. Here, the venting units 40 are installed to side walls of the battery casing 11. In this configuration the optional cover cap 5 can be provided such that the cover cap opening faces downwards opposite to the direction of gravity. As a consequence, dust or dirt can be efficiently hindered to enter the venting unit. Further, the spring 3 of the venting unit 40 is oriented perpendicular to the direction of gravity and the spring 3 acts independently of gravity. However, they may also be installed to the top or bottom wall of the battery casing 11. In one embodiment, each wall has at least one venting unit 40, so that the pressure can be released uniformly. In another embodiment, the venting unit 40 is installed on all but one wall. In another embodiment, there may be two or more venting units 40 per wall.

Fig. 6B illustrates a schematic cross section side view of an electric vehicle 1000 including a battery pack 100. The electric vehicle is not limited to one battery pack 100, but may include a plurality of battery packs 100. Further, even though venting units 40 are not visible here, the cover cap openings 51 point into the direction of gravity, that is, to the underside 1001 of the electric vehicle 1000.

Fig. 7 shows a flow chart for a method 300 for assembling a venting unit 40 according to the embodiment of Figs 1 to 3B. In a first step 301, the housing 1 of the venting unit 40 is placed together with the first valve part 2 into an ultrasonic tool fixture. That is, in the first step 301, the first valve part 2 is placed onto the ultrasonic tool fixture with the stem 6 facing away from the ultrasonic tool fixture. Thereafter, the housing 1 is placed on top of the first valve part 2 such that the stem 6 protrudes through the valve opening 8. In a second step 302, the spring 3 is placed on the housing 1 opposite to the first valve part 2. That is, the spring 3 is on the upper side of the first valve part 2 and of the housing 1. Then, the second valve part 4 is placed onto the spring 3. In a third step 303, a second ultrasonic tool is applied from the top to compress the spring 3 together and, through vibration, the first valve part 2 and the second valve part 4 are welded together, for example by ultrasonic welding. The welding results in a weld seam 24 as, for example, shown in Fig. 1C. The arrangement of the parts is essentially that shown in Figs. 3A and 3B, except that the cover cap 5 is not present during welding and that the first and second ultrasonic tool are not shown. However, the disclosure is not limited to this construction and the stem 6 may also be integrally formed with the second valve part 4, so that a weld seam 24 is formed between the first valve part 2 and the second valve part 4 next to the opening portion 21. Alternatively, the first valve part 2 and the second valve part 4 may be connected by chemical connection means like glue or mechanical connection means like hooks 53 and latches.

**Reference Signs**

| | |
|---|---|
| 1 | housing |
| 2 | first valve part |
| | 21 opening portion |
| | 211 planar part |
| | 212 sloped part |
| | 213 valve seal |
| | 22 guide rib |
| | 23 guide surface |
| | 24 weld seam |
| 3 | spring |
| 4 | second valve part |
| | 41 inner circle |
| | 42 outer circle |
| | 43 webs |
| 5 | cover cap |
| | 51 cover cap opening |
| | 52 pin |
| | 53 hook |
| 6 | stem |
| 7 | ultrasonic welded connection |
| 8 | valve opening |

9      sealing lip
10     valve assembly
11     battery casing
12     venting hole
13     mounting means
14     housing surface
15     battery cells
16     housing seal
31     opened end position
32     closed end position
33     first valve part travel distance
34     release gap

40     venting unit

100    battery pack
101    closed state
102    open state
103    spring force
105    force path
106    conventional design
107    optimized design
108    pretension force
200    flow area shift

300    method for assembling venting unit
301    placing first parts onto first ultrasonic tool fixture
302    placing second parts
303    applying second ultrasonic tool fixture to send part
1000   electric vehicle
1001   underside

L      longitudinal axis
r      radial direction
p      plane of the valve opening

**Claims**

1. A venting unit (40) for a battery pack (100),

   wherein the venting unit (40) comprises a valve assembly (10);
   the valve assembly (10), comprising:

   a housing (1) with a valve opening (8) and a sealing lip (9) formed around the valve opening (8);
   a first valve part (2) configured for opening and closing the valve opening (8),
   a stem (6) being connected to the first valve part (2) on one of its ends, the opposing end of the stem (6) being provided with a second valve part (4),
   a spring (3) extending along the stem (6) between the housing (1) and the second valve part (4);

   wherein the first valve part (2) comprises an opening portion (21) with a planar part (211), and a sloped part (212) being connected on one side to the planar part (211) and on the opposing side being connected to the stem (6), wherein a gradient of the sloped part (212) increasing from the planar part (211) towards the stem (6), wherein in a closed state (101) of the valve assembly (10), the planar part (211) of the opening portion (21) and the sealing lip (9) of the housing (1) are provided on top of each other to seal a gap between the opening portion (21) and the housing (1), and
   wherein in an open state (102) of the valve assembly (10), the opening portion (21) is configured to move away from the sealing lip (9) against the force of the spring (3) such that a release gap (34) is formed between the sloped part (212) of the opening portion (21) and the sealing lip (9).

2.  The venting unit (40) according to claim 1, wherein the venting unit (40) further comprises a cover cap (5) covering the valve assembly (10), wherein the cover cap (5) is provided with at least one cover cap opening (51).

3.  The venting unit (40) according to claim 1 or 2, wherein the stem (6) and the spring (3) extend perpendicular to the first valve part (2) and the second valve part (4).

4.  The venting unit (40) according to any one of the preceding claims, wherein the first valve part (2) is provided with at least one guide rib (22) on an inner surface portion (21) of the first valve part (2).

5.  The venting unit (40) according to claim 4, wherein the guide rib (22) is provided such that the guide rib (22) and the sealing lip (9) remain in contact during opening of the valve assembly (10).

6.  The venting unit (40) according to any one of the preceding claims, wherein the gradient of the sloped part (212) has its smallest value at the connection point of the sloped part (212) to the planar part (211).

7.  The venting unit (40) according to any one of the preceding claims, wherein the first valve part (2) is movable along a longitudinal direction (L) of the stem (6) between an opened end position (31) and a closed end position (32).

8.  The venting unit (40) according to any one of the preceding claims, wherein, during opening of the valve assembly (10), the release gap (34) between the sealing lip (9) and the sloped part (212) increases, the maximum of the release gap (34) being equal to the distance between the sealing lip (9) and the stem (6).

9.  The venting unit (40) according to any one of the preceding claims, wherein the spring (3) is in a pretensioned state in the closed state of the valve assembly (10).

10. The venting unit (40) according to any one of the preceding claims, wherein the stem (6) is hollow.

11. The venting unit (40) according to any one of the preceding claims, wherein the sealing lip (9) for contacting with the planar part (211) of the first valve part (3) is elevated with respect to its surrounding housing surface (14).

12. A battery pack (100) comprising a plurality of battery cells accommodated within a battery casing (11) and at least one venting unit (40) according to anyone of the previous claims, wherein
    the battery casing (11) is provided with the at least one venting unit (40) mounted to a respective venting hole (12) formed at the battery casing (11).

13. The battery pack (100) according to claim 12, wherein the guide rib (22) comprises a guide surface (23) configured to move parallel to the longitudinal direction (L) of the stem (6).

14. The battery pack (100) according to claim 12 or 13, wherein the one or more cover cap openings (51) point to the direction of gravity.

15. An electric vehicle comprising the battery pack (100) according to any one of claims 12 to 14.

FIG. 1A

FIG. 1B

FIG. 1C

FIG. 1D

FIG. 2

40

13

5

1

51

10

## FIG. 3A

4

42 43 41 6

40

13

8

3

16

22

1

2, 21, 212

9

5

51

## FIG. 3B

Spring calculation E74

FIG. 4

EP 4 468 492 A1

FIG. 5A

FIG. 5B

100

11

12

40

40

15

FIG. 6A

1000

1001    100

FIG. 6B

300

301

302

303

FIG. 7

Europäisches
Patentamt

European
Patent Office

Office européen
des brevets

# EUROPEAN SEARCH REPORT

Application Number

EP 24 16 8231

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2020 131594 A1 (MANN & HUMMEL GMBH [DE]) 2 June 2022 (2022-06-02) | 1-3, 6-12,14, 15 | INV. H01M50/333 F16K17/04 |
| Y | * figures 1, 10-12 * & US 2023/291067 A1 (ZBIRAL ROBERT [DE] ET AL) 14 September 2023 (2023-09-14) * paragraphs [0001], [0004], [0010], [0094] - paragraph [0103] * * claims 1-11 * | 4,5,13 | |
| Y | WO 2022/255376 A1 (PIOLAX INC [JP]) 8 December 2022 (2022-12-08) | 4,5,13 | |
| A | * figures 3, 8, 11 * * paragraph [0030] - paragraph [0044] * * claims 1-8 * | 1-3, 6-12,14, 15 | |
| A | US 2021/320375 A1 (ZBIRAL ROBERT [DE] ET AL) 14 October 2021 (2021-10-14) * the whole document * | 1-15 | |

TECHNICAL FIELDS SEARCHED (IPC)

H01M

The present search report has been drawn up for all claims

| Place of search | Date of completion of the search | Examiner |
|---|---|---|
| The Hague | 25 September 2024 | Di Berardino, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 24 16 8231

This annex lists the patent family members relating to the patent documents cited in the above-mentioned European search report.
The members are as contained in the European Patent Office EDP file on
The European Patent Office is in no way liable for these particulars which are merely given for the purpose of information.

25-09-2024

| Patent document cited in search report | Publication date | Patent family member(s) | | Publication date |
|---|---|---|---|---|
| DE 102020131594 A1 | 02-06-2022 | CN | 116601825 A | 15-08-2023 |
| | | DE | 102020131594 A1 | 02-06-2022 |
| | | EP | 4252308 A1 | 04-10-2023 |
| | | US | 2023291067 A1 | 14-09-2023 |
| | | WO | 2022112036 A1 | 02-06-2022 |
| WO 2022255376 A1 | 08-12-2022 | JP | WO2022255376 A1 | 08-12-2022 |
| | | WO | 2022255376 A1 | 08-12-2022 |
| US 2021320375 A1 | 14-10-2021 | CN | 113228394 A | 06-08-2021 |
| | | DE | 102019100094 A1 | 09-07-2020 |
| | | EP | 3906587 A1 | 10-11-2021 |
| | | US | 2021320375 A1 | 14-10-2021 |
| | | WO | 2020141044 A1 | 09-07-2020 |

EPO FORM P0459

For more details about this annex : see Official Journal of the European Patent Office, No. 12/82